# EUROPÄISCHE PATENTANMELDUNG

(11) **EP 1 050 691 A2**
(43) Veröffentlichungstag der Anmeldung: **08.11.2000**
(21) Anmeldenummer: 00109241.0
(22) Anmeldetag: 28.04.2000
(51) Int. Cl.: F16B 21/12, F16B 39/04, F16B 41/00

(54) **Schraubensicherung**

(30) Priorität: 03.05.1999 DE 29908178 U; 30.06.1999 DE 29911394 U
(71) Anmelder: Junker & Partner GmbH, 66636 Tholey (DE)
(72) Erfinder: Junker, Franz-Rudolf, 66636 Tholey-Sotzweiler (DE)
(74) Vertreter: Bernhardt, Winfrid, Dr.-Ing.

(57) **Zusammenfassung**

Die Erfindung betrifft eine Schraubensicherung zur Drehblockierung einer Schraube (29) in einem Gewinde, mit einem in eine Ausnehmung in der Schraube eingreifenden, in einer Bohrung (21) geführten Sicherungsstift (30).
Die Schraubensicherung nach der Erfindung ist gekennzeichnet durch zueinander schräg stehende Achsen von Gewinde und Bohrung (21). Diese Erfindungslösung ermöglicht die Drehsicherung durch ein Sicherungsstück in Fällen, in welchen aus Platzgründen die Verstiftung durch einen zur Schraubenachse senkrechten Stift nicht möglich oder erschwert ist.

## Beschreibung

Die Erfindung betrifft eine Schraubensicherung zur Drehblockierung einer Schraube in einem Gewinde, mit einem in eine Ausnehmung in der Schraube eingreifenden, in einer Bohrung geführten Sicherungsstift.

Es sind derartige Schraubensicherungen durch Benutzung bekannt bei denen die Achse des Sicherungsstifts senkrecht zur Schraubenachse angeordnet ist und der Sicherungsstift mit einem Ende in eine in dem Schraubenbolzen oder Schraubenkopf vorgesehene Bohrung hineinragt. Ferner können sich die Gewindebohrung und die dazu senkrechte Bohrung für den Sicherungsstift einander derart überschneiden, daß der Sicherungsstift formschlüssig mit einem Teil seines Umfangs in eine tangential in den Schraubenbolzen oder Schraubenkopf eingebrachte Ausnehmung eingreift.

Durch die Erfindung wird eine neue Schraubensicherung der eingangs erwähnten Art geschaffen, welche durch zueinander schräg stehende Achsen von Gewinde und Bohrung gekennzeichnet ist.

Diese Erfindungslösung ermöglicht die Schraubensicherung durch einen Sicherungsstift in Fällen, in welchen aus Platzgründen die Verstiftung durch einen zur Schraubenachse senkrechten Stift nicht möglich oder erschwert ist. Erstreckt sich die Gewindebohrung z.B. senkrecht zu einer ebenen Oberfläche eines Werkstücks, so läßt sich in eine zu dieser Oberfläche hin öffnende, schräg zur Gewindeachse verlaufende Bohrung der Sicherungsstift schräg zur eingedrehten und angezogenen Schraube in die Bohrung einschieben. Zur Herstellung der Ausnehmung in der Schraube wird nach dem Eindrehen und Festziehen der Schraube unter Nutzung der Bohrung für den Stift in die Schraube die jeweilige Ausnehmung eingebohrt.

In einer bevorzugten Ausführungsform der Erfindung ist die Ausnehmung am in Vorschubrichtung der Schraube vorderen Ende des Schraubenbolzens angeordnet. Vorteilhaft wirkt sich die mit der Ausnehmung verbundene Schwächung der Schraube in dieser Position am geringsten aus. Bei Bruch an der Schwachstelle bleibt der Schraubenbolzen über den größten Teil seiner Länge unversehrt.

Vorzugsweise liegen die Achsen von Gewinde und Bohrung bzw. Schraube und Sicherungsstift in einer Ebene und die Ausnehmung weist eine vom Umfang des Schraubenbolzens zu dessen Stirnfläche durchgehende Fußlinie auf. In diesem Fall ist der Schraubenbolzen an dem genannten Ende lediglich abgeschrägt, wobei die Abschrägungsfläche in ihrer Form an die zylindrische Mantelfläche des Sicherungsstifts angepaßt ist. Eine ähnliche Ausnehmung für den Eingriff eines Sicherungsstifts könnte auch an der Unterkante eines Schraubenkopfes gebildet sein.

In der bevorzugten Ausführungsform der Erfindung ist der Sicherungsstift in der Bohrung durch Preßsitz arretiert, wobei er ein Innengewinde aufweist, über das er für den Fall, daß die Schraube gelöst werden muß, mit einer Abziehvorrichtung zum Ausziehen des Sicherungsstifts aus der Bohrung verbunden werden kann.

Die Schraubensicherung nach der Erfindung kann vorzugsweise bei einem in einer Nut verschiebbaren Nutenstein zur Anwendung kommen, welcher das genannte Gewinde und die genannte Bohrung aufweist wobei der Nutenstein in der Nut über die zu sichernde Schraube verklemmbar ist. Durch die erfindungsgemäße Sicherung kann sich nach Verklemmung des Nutensteins in der Nut die Schraube nicht lösen und der Nutenstein verbleibt an der gewünschten Verschiebungsposition in der Nut. Der Nutenstein kann daher z.B. im Rahmen von Längenmeßeinrichtungen als Verbindungsstück zu Werkstückhaltern oder Meßfühlerhaltern dienen.

In einer weiteren Anwendung der Erfindung sind das Gewinde und die Bohrung in einem über die Schraube an einer Basis zu befestigenden Block, z.B. in dem oben erwähnten Nutenstein, vorgesehen, welcher einen Paßsitz für einen über den Block in reproduzierbarer Anordnung an der Basis anzubringenden Gegenstand aufweist. Bei dem Gegenstand kann es sich z.B. um ein Trägerteil für ein in einer Meßposition zu halterndes Werkstück oder/und einen Teil einer Meßeinrichtung handeln. Vorzugsweise ist der Gegenstand von dem Block unter Beibehaltung der Befestigung des Blocks an der Basis lösbar. Durch den Paßsitz ist dann gesichert, daß der Gegenstand nach der Lösung von dem Block stets wieder in gleicher Anordnung wie vorher an dem Block anbringbar ist.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine Halterung für ein auszumessendes Werkstück, bei welcher die erfindungsgemäße Schraubensicherung verwendet ist, in einer Seitenansicht,
- Fig. 2: die Halterung von Fig. 1 in einer Draufsicht,
- Fig. 3 bis 5: ein Detail der Halterung von Fig. 1, in dem ein Nutenstein in einer Seitenansicht, Draufsicht und Stirnansicht gezeigt ist,
- Fig. 6: ein Ausführungsbeispiel für eine erfindungsgemäße Schraubensicherung, die bei dem Nutenstein von Fig. 3 bis 5 verwendet ist,
- Fig. 7 und 8: Teilansichten der Halterung von Fig. 1, in denen ein weiterer Nutenstein in einer Seiten- und Stirnansicht gezeigt ist, und
- Fig. 9: ein weiteres Ausführungsbeispiel für eine erfindungsgemäße Schraubensicherung, die bei dem in Fig. 7 und 8 gezeigten Nutenstein verwendet ist.

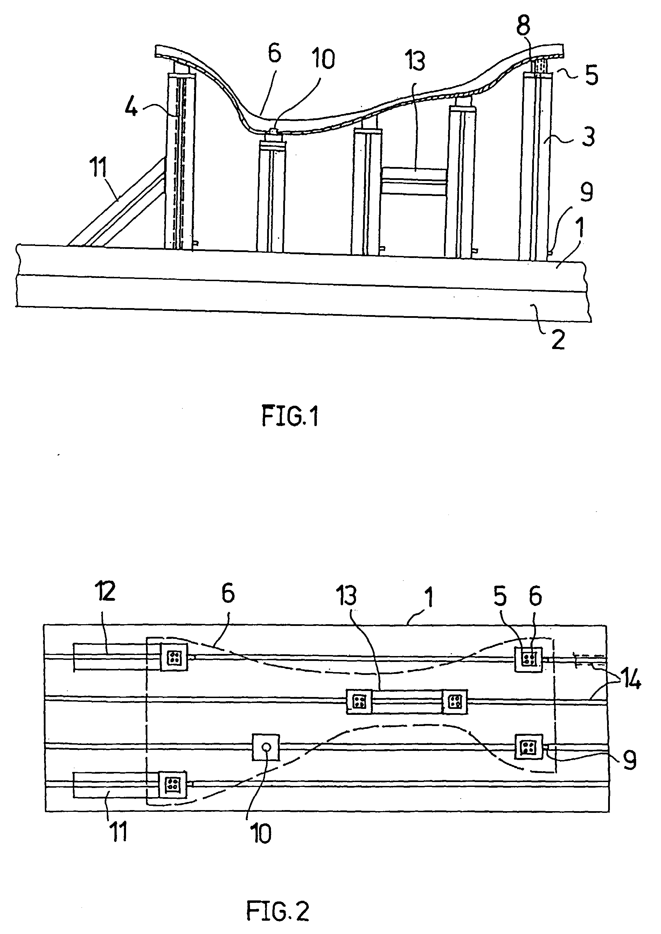

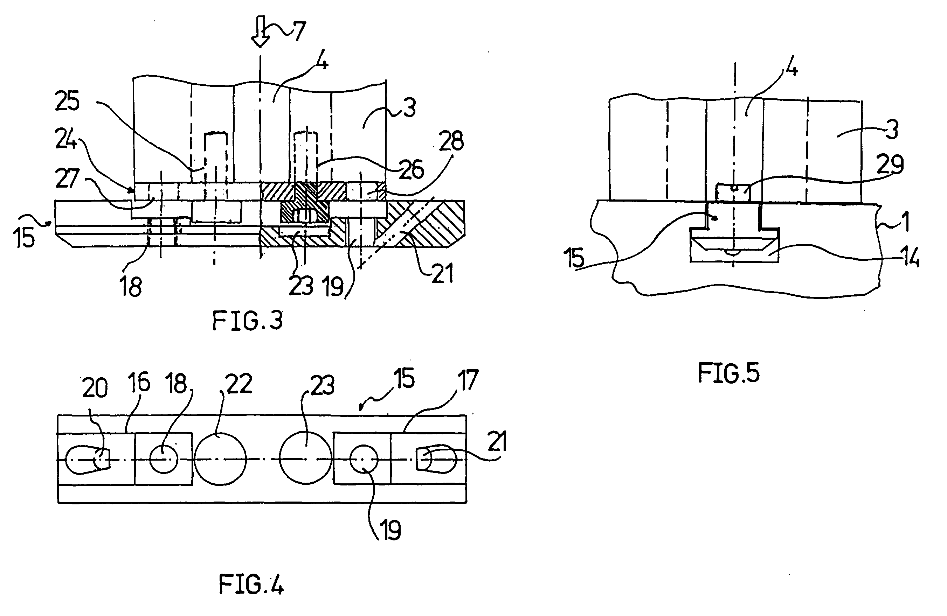

Mit dem Bezugszeichen 1 ist in der Fig. 1 eine Basisplatte mit hinterschnittenen Nuten 14 bezeichnet, die auf einer Grundplatte 2 einer (im übrigen nicht gezeigten) Koordinatenmeßeinrichtung in einer bestimmten Position in bezug auf die Koordinatenmeßeinrichtung angeordnet ist. Auf der Basisplatte sind Trägersäulen 3 angeordnet, deren Befestigung auf der Basisplatte über Nutensteine weiter unten anhand der Fig. 3 bis 9 näher erläutert wird.

Bei den Trägersäulen 3 handelt es sich in dem gezeigten Ausführungsbeispiel um Aluminiumhohlprofile mit einem quadratischen Querschnitt und einer Quadratseitenlänge von 50 mm. An jeder Seite der quadratischen Profile ist eine Längsnut 4 vorgesehen. Wie in Fig. 1 beispielhaft an einer der Säulen 3 durch Strichlinien angedeutet ist, handelt es sich um hinterschnittene Nuten. Auf jeder der Säulen 3 ist jeweils ein Trägerkopf 5 montiert. Auf den Trägerköpfen 5 liegt ein Werkstück 6 auf, z.B. ein aus Blech gepreßtes Karosserieteil oder ein instabiles, aus einem Kunststofflagenmaterial, z.B. durch Tiefziehen, hergestelltes Formteil.

Mit einer Ausnahme weisen alle Trägerköpfe 5 zu einer Werkstückanlagefläche öffnende Ansaugkanäle 8 auf, welche auf ihrer dem Werkstück 6 abgewandten Seite mit einer Unterdruckleitung in Verbindung stehen, die durch den Innenraum der durch das Hohlprofil gebildeten Trägersäulen 3 zu Sauganschlüssen 9 geführt sind. Ein instabiles Formteil kann so verformungsfrei gehaltert werden.

Einer der Trägerköpfe weist eine Anlagefläche auf, von der ein Dom 10 vorsteht, welcher in eine in dem Werkstück 6 vorgesehene Bohrung eingreift.

Mit den Bezugszeichen 11 bis 13 sind Querverstrebungen bezeichnet, die an den betreffenden Trägersäulen bzw. der Basisplatte 1 in gleicher Weise über einen Nutenstein befestigt sind wie die Trägersäulen 5 auf der Basisplatte 1. Die Verstrebungen 11 bis 13 sind in dem gezeigten Ausführungsbeispiel aus dem gleichen Aluminiumhohlprofil wie die Trägersäulen 3 gebildet.

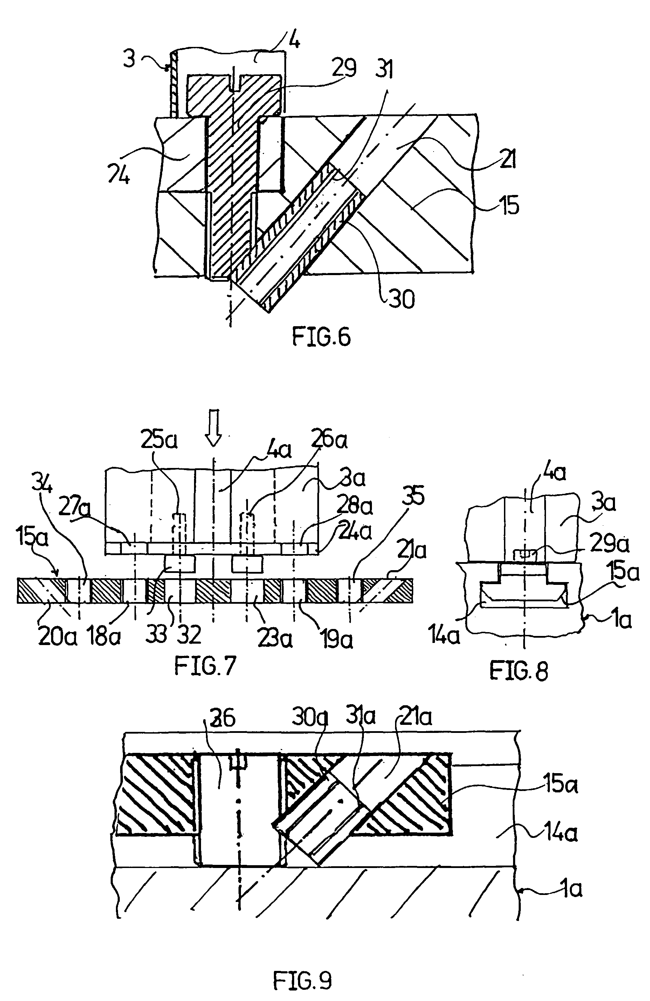

Es wird nun auf die Fig. 3 bis 5 Bezug genommen, wo mit dem Bezugszeichen 15 ein mit einer der Säulen 3 verbindbarer Nutenstein für die Anordnung in einer der hinterschnittenen Nuten 14 oder einer Längsnut 4 gezeigt ist. Der durch einen länglichen Körper gebildete Nutenstein weist Vorsprünge 16 und 17 auf, mit denen er in einem oberen Teil der hinterschnittenen Nuten 14 geführt ist, während der Hauptkörper in den hinterschnittenen Teil der Nut 14 eingreift. Im Bereich der abgestuften Vorsprünge 16,17 ist in den Nutenstein jeweils eine ein Gewinde aufweisende Durchgangsbohrung 18 bzw. 19 eingebracht. Schräg zu den Durchgangsbohrungen 18 und 19 erstreckt sich jeweils eine weitere Bohrung 20 bzw. 21 für einen Sicherungsstift. Der Nutenstein 15 weist ferner kreisrunde Ausnehmungen 22 und 23 für die Aufnahme von Schraubenköpfen auf, welche von einem Verbindungssteg 24 vorstehen. Die Schraubenköpfe gehören zu Schrauben 25,26, über die der Verbindungssteg 24 an der jeweiligen Säule 3 befestigt ist. In dem Verbindungssteg 24 sind ferner Durchgangsbohrungen 27 und 28 für eine Schraubverbindung mit dem Nutenstein 15 vorgesehen. Wie aus Fig. 5 hervorgeht ist der Kopf einer Befestigungsschraube 29 jeweils in einer der Nuten 4 der Säule 3 angeordnet und damit zugänglich.

Bei der in den Fig. 1 und 2 gezeigten Meßobjekthalterung sind die Trägersäulen 3 in einer in bezug auf die genannte Meßvorrichtung vorbestimmten Position angeordnet, die als Bezugsposition für Messungen über einen längeren Zeitraum konstant bleiben soll. Zur Befestigung der Säulen 3 auf der Basisplatte 1 über einen Verbindungssteg 24 werden die Säulen 3 auf den Nutenstein 15 gemäß Pfeil 7 aufgesetzt und Schrauben 29 in die Gewindebohrungen 18,19 eingedreht wobei die Trägersäule 3 stirnseitig zur Anlage gegen die Trägerplatte 1 kommt und der Nutenstein 15 in der Nut 14 verklemmt wird. In diesem verklemmten Zustand bei festgezogenen Schrauben 29 wird durch die Bohrung 20 bzw. 21 hindurch derjenige Teil der Schraube 29, der in die Durchgangsbohrung 20 bzw. 21 hineinsteht, ausgebohrt. Danach erfolgt eine Verstiftung durch einen Sicherungsstift 30, wie in Fig. 6 gezeigt ist. Der in der Bohrung 21 im Preßsitz gehaltene Sicherungsstift 30 greift formschlüssig in die durch das Ausbohren erzeugte Ausnehmung in der Schraube 29 ein und verhindert eine Drehung der Schraube 29 im Gewinde der Durchgangsbohrung 18,19. Auf diese Weise kann gesichert werden, daß die Säule 3 über einen längeren Benutzungszeitraum an der durch die Verklemmung des Nutensteins 15 in der Nut 14 festgelegten Position verbleibt.

Der Sicherungsstift 30 weist ein Innengewinde 31 auf, über das er im Falle einer erforderlichen Demontage mit einem geeigneten Abziehwerkzeug verbunden werden kann.

In dem Ausführungsbeispiel von Fig. 6 ist in der Schraube 29 in Vorschubrichtung am Schraubenbolzenende eine Ausnehmung erzeugt, die eine vom Umfang des Schraubenbolzens bis zu deren Stirnfläche durchgehende Fußlinie aufweist und durch eine der zylindrischen Mantelfläche des Stifts 30 entsprechende zylindrische Fläche begrenzt ist.

Es wird nun auf die Fig. 7 bis 9 Bezug genommen, wo gleiche oder gleichwirkende Teile mit derselben, jedoch mit dem Buchstaben a versehenen Bezugszahl bezeichnet sind.

Ein in den Fig. 7 bis 8 gezeigter Nutenstein 15a unterscheidet sich von dem Nutenstein 15 gemäß Fig. 3 bis 5 unter anderem darin, daß neben einer der Ausnehmung 23 entsprechenden Ausnehmung 23a eine als Paßsitz ausgebildete Ausnehmung 32 vorgesehen ist, in welche ein durch Schleifen an den Paßsitz angepaßter Schraubenkopf 33 einer Schraube 25a eingreift, die neben einer Schraube 28a zur Befestigung eines Verbindungsstegs 24a an einer Säule 3a dient. Durchgangsbohrungen 18a und 19a in dem Nutenstein 15a dienen zusammen mit Durchgangsbohrungen 27a und 28a in dem Verbindungssteg 24a zur Schraubbefestigung des Nutensteins 15a mit dem Verbindungssteg 24a über Schrauben 29a, wobei jedoch nicht wie bei dem vorangehenden Ausführungsbeispiel mit dieser Verschraubung gleichzeitig eine Verklemmung des Nutensteins 15a in einer Nut 14a erfolgt.

Für eine Verklemmung des Nutensteins 15a in der Nut 14a sind gesonderte Gewindebohrungen 34,35 vorgesehen, denen wie den Gewindebohrungen 18,19 des vorangehenden Ausführungsbeispiels schräg verlaufende Durchgangsbohrungen 20a,21a zugeordnet sind.

Wie aus Fig. 9 hervorgeht, erfolgt die Verklemmung des über den Verbindungssteg 24a mit der Säule 3a verbundenen Nutensteins 15a in der Nut 14a mit Hilfe von Madenschrauben 36, welche gegen den Boden der Nut 14a drücken, so daß der Nutenstein 15a in der hinterschnittenen Nut 14a angehoben und dadurch in der Nut verklemmt wird. Zur Drehsicherung der angezogenen Madenschrauben 36 dient jeweils ein Sicherungsstift 30a mit einem Innengewinde 31a, der in eine durch Anbohren der Madenschraube 36 durch die Schrägbohrung 21a hindurch erzeugte Ausnehmung in der Schraube formschlüssig eingreift und so eine Lösung der Madenschraube 36 wirksam verhindert.

Bei dem Ausführungsbeispiel von Fig. 7 bis 9 kann die Säule 3a durch Lösen der Schrauben 29a von dem Nutenstein 15a entfernt werden, während der Nutenstein in seiner durch die gesicherte Verklemmung festgelegten Position verbleibt. Durch die Passung 32,33 ist dafür gesorgt. daß nach einer Wiedermontage der Säule 3a auf der Trägerplatte 1a die Säule 3a genau ihre ursprüngliche Position einnimmt.

## Patentansprüche

1. Schraubensicherung zur Drehblockierung einer Schraube (29,36) in einem Gewinde, mit einem in eine Ausnehmung in der Schraube (29,36) eingreifenden, in einer Bohrung (20,21) geführten Sicherungsstift (30),
gekennzeichnet durch zueinander schräg stehende Achsen von Gewinde (18,19;34,35) und Bohrung (20,21).

2. Schraubensicherung nach Anspruch 1,
dadurch gekennzeichnet,
daß die Ausnehmung am in Vorschubrichtung der Schraube (29) vorderen Ende des Schraubenbolzens angeordnet ist.

3. Schraubensicherung noch Anspruch 1 oder 2,
dadurch gekennzeichnet,
daß die Achsen von Schraube (29,36) und Sicherungsstift (30) in einer Ebene liegen.

4. Schraubensicherung nach Anspruch 2 oder 3,
dadurch gekennzeichnet,
daß die Ausnehmung eine von dem Umfang des Schraubenbolzens oder Schraubenkopfes zu dessen Stirnfläche durchgehende Fußlinie aufweist.

5. Schraubensicherung noch einem der Ansprüche 1 bis 4,
dadurch gekennzeichnet,
daß der Sicherungsstift (30) in der Bohrung durch Preßsitz arretiert ist.

6. Schraubensicherung noch einem der Ansprüche 1 bis 5,
dadurch gekennzeichnet,
daß der Sicherungsstift (30) ein Innengewinde (31) für die Verbindung mit einer Abziehvorrichtung aufweist.

7. Schraubensicherung nach einem der Ansprüche 1 bis 6,
dadurch gekennzeichnet,
daß das Gewinde und die Bohrung in einem in einer Nut (14) verschiebbaren Nutenstein (15) und der Nutenstein (15) zur Verklemmung in der Nut (14) über die genannte Schraube (29,36) vorgesehen ist.

8. Schraubensicherung nach einem der Ansprüche 1 bis 7,
dadurch gekennzeichnet,
daß das Gewinde (34,35) und die Bohrung (20a,21a) in einem über die Schraube (36) an einer Basis (1a) zu befestigenden Block (15a) vorgesehen sind, welcher einen Paßsitz (32) für einen in reproduzierbarer Anordnung an dem Block (15a) anzubringenden Gegenstand (3a,24a) aufweist.

9. Schraubensicherung nach Anspruch 8,
dadurch gekennzeichnet,
daß der Block durch den Nutenstein (15a) gebildet ist.

10. Schraubensicherung nach Anspruch 8 oder 9,
dadurch gekennzeichnet,
daß der Gegenstand (3a,24a) von dem Block (15a) unter Beibehaltung seiner Befestigung an der Basis (1a) lösbar ist.

11. Schraubensicherung nach einem der Ansprüche 8 bis 10,
dadurch gekennzeichnet,
daß der Gegenstand (3a,24a) ein Trägerteil (3a) für ein in einer Meßposition zu halterndes Werkstück oder/und ein Teil einer Meßeinrichtung ist.
